# EUROPÄISCHE PATENTSCHRIFT

(11) **EP 3 987 347 B1**
(45) Veröffentlichungstag und Bekanntmachung des Hinweises auf die Patenterteilung: **07.06.2023**
(21) Anmeldenummer: 19762294.7
(22) Anmeldetag: 27.08.2019
(51) Int. Cl.: G02C 3/00

(54) **ADAPTERVORRICHTUNG FÜR EINE SICHTSCHEIBE ZUR OPTISCHEN VERGLASUNG MIT BRILLENGLÄSERN**
ADAPTER DEVICE FOR A LENS PANEL FOR OPTICALLY GLAZING WITH SPECTACLE LENSES
DISPOSITIF ADAPTATEUR POUR UN ÉCRAN PERMETTANT LE VITRAGE OPTIQUE AVEC DES VERRES DE LUNETTE

(30) Priorität: 19.06.2019 AT 601562019
(43) Veröffentlichungstag der Anmeldung: 27.04.2022
(73) Patentinhaber: Rauter, Christoph, 1040 Wien (AT)
(72) Erfinder: Rauter, Christoph, 1040 Wien (AT)
(74) Vertreter: Puchberger & Partner Patentanwälte
(86) Internationale Anmeldenummer: PCT/AT2019/060274
(87) Internationale Veröffentlichungsnummer: WO 2020/252508

(56) Entgegenhaltungen:
- WO-A1-03/102670
- US-A1- 2016 299 358

## Beschreibung

Die vorliegende Erfindung betrifft eine Adaptervorrichtung für die Sichtscheibe einer Brille oder eines Helmvisiers gemäß dem Oberbegriff des unabhängigen Patentanspruchs. Die Erfindung betrifft weiterhin eine Sichtscheibe, die diese Adaptervorrichtung umfasst, sowie eine Brille oder ein Helmvisier mit einer erfindungsgemäßen Sichtscheibe, sowie einen Helm mit einem solchen Helmvisier.

Die Verwendung von konventionellen optischen Sehhilfen, insbesondere von Brillen mit optischen Linsen, in Verbindung mit Schutzbrillen, Sportbrillen, Helmvisieren oder dergleichen ist für den Nutzer oft unkomfortabel und kann mit zahlreichen Problemen verbunden sein, die den Tragekomfort und die Verwendungssicherheit einschränken. Beispielsweise kann beim Tragen ein Verrutschen der optischen Sehhilfe auftreten und deren Sichtscheiben können durch kondensierte Flüssigkeit beschlagen. Um ein rasches Zerkratzen der optischen Linsen zu vermeiden, bzw. um das Auge des Nutzers besser vor äußeren Einflüssen zu schützen, wäre eine Kombination von mehreren Sichtscheiben wünschenswert.

Im Stand der Technik sind unterschiedliche Vorrichtungen bekannt, um die kombinierte Verwendung optischer Linsen von Brillen mit beispielsweise Sichtscheiben von Schutzbrillen zu ermöglichen. Derartige Vorrichtungen haben jedoch verschiedene Nachteile.

Ein Problem ergibt sich insbesondere bei der Verwendung von Sichtscheiben, die nicht das identische Krümmungsprofil wie die optischen Linsen aufweisen. Dabei bezeichnet der Begriff Krümmungsprofil den Verlauf der Krümmungskurven einer Scheibe entlang zweier orthogonaler Richtungen.

Beispielsweise sind torische Sichtscheiben bekannt, die auch als zylindrische Sichtscheiben bezeichnet werden. Derartige torische oder zylindrische Sichtscheiben weisen eine unterschiedliche Krümmung zwei zueinander orthogonalen Raumrichtungen auf. Torische Sichtscheiben werden beispielsweise bei Skibrillen oder Motocross-Brillen eingesetzt.

Die Kombination torischer Sichtscheiben mit optischen Linsen von Brillen ist problematisch, da optischen Linsen üblicherweise sphärisch bzw. kugelförmig sind. Dies bedeutet, dass die Radien der Krümmungskurven des Krümmungsprofils bei optischen Linsen in zwei zueinander orthogonalen Richtungen identisch sind. Werden diese nun mit torischen Sichtscheiben kombiniert, verlaufen die Krümmungsprofile der optischen Linse und der Sichtscheibe nicht parallel, sodass die Abbildungsqualität verschlechtert ist. Werden sphärische optische Linsen direkt mit torischen Sichtscheiben verbunden, berühren diese einander aufgrund der unterschiedlichen Krümmungsprofile nicht gleichmäßig und es kommt zu einem raschen Beschlagen, was für den Tragekomfort unerwünscht ist. Weiterhin entsteht an den Verbindungsstellen zwischen den optischen Linsen und der Sichtscheibe eine hohe mechanische Spannung, sodass die Verbindung selbst nach kurzer Zeit aufreißen kann. Eine Sichtscheibe nach der Präambel von Anspruch 1 ist aus US 2016/299358 bekannt.

Es ist daher eine Aufgabe der vorliegenden Erfindung, die oben beschriebenen Probleme des Standes der Technik zu überwinden und eine Vorrichtung zu schaffen, die eine Kombination bzw. eine Verbindung von Scheiben mit unterschiedlichen Krümmungsprofilen bzw. mit unterschiedlicher Krümmungsgeometrie ermöglicht. Diese und andere Aufgaben der Erfindung werden durch eine Adaptervorrichtung mit den Merkmalen des unabhängigen Patentanspruchs gelöst.

Erfindungsgemäß ist vorgesehen, dass die Adaptervorrichtung ein stegförmiges Randelement mit einer ersten Auflagefläche zur Auflage einer Außenscheibe und einer zweiten Auflagefläche zur Auflage einer Innenscheibe umfasst, wobei die Auflageflächen zueinander nicht parallel sind.

In Zusammenhang mit der vorliegenden Erfindung bedeutet "parallel" insbesondere, dass der Normalabstand aller Punkte zweier oder mehrerer Kurven oder Ebenen gleich groß und größer als Null ist.

Die erfindungsgemäße Adaptervorrichtung ermöglicht eine Entkopplung des Krümmungsprofils der Innenscheibe vom Krümmungsprofil der Außenscheibe, wobei die beiden Scheiben dennoch fest miteinander verbunden werden können. Es können also Scheiben mit beliebigen Krümmungsprofilen miteinander verbunden werden.

Gegebenenfalls kann vorgesehen sein, dass die erste Auflagefläche ein durch zwei Krümmungskurven gebildetes erstes Krümmungsprofil aufweist, und die zweite Auflagefläche ein durch zwei Krümmungskurven gebildetes zweites Krümmungsprofil aufweist, wobei sich das erste Krümmungsprofil vom zweiten Krümmungsprofil unterscheidet.

Die Krümmungskurven bezeichnen in diesem Zusammenhang jene zwei Kurven, die sich als Schnittkurven ergeben, wenn die Auflageflächen mit zwei zueinander orthogonal stehenden Normalebenen geschnitten werden. Die Normalebenen sind orthogonal in Bezug auf die jeweilige Auflagefläche ausgerichtet. Bei den beiden Normalebenen kann es sich insbesondere um eine horizontal verlaufende Ebene und eine vertikal verlaufende Ebene handeln. Die beiden Krümmungskurven definieren das Krümmungsprofil einer Auflagefläche. Jede Krümmungskurve kann beispielsweise als Gerade, Kreisbogen, Parabel, Hyperbel oder einer beliebigen anderen Kurvenform verlaufen.

Das Krümmungsprofil einer Auflagefläche kann auch planar sein. Dies ist dann der Fall, wenn die entsprechenden Krümmungskurven Geraden sind.

Das Krümmungsprofil einer Auflagefläche wird als torisch oder cylindrisch bezeichnet, wenn eine Krümmungskurve des Krümmungsprofils kreisbogenförmig ausgebildet ist, und die andere Krümmungskurve eine Gerade ist. Das Krümmungsprofil einer Auflagefläche kann aber ebenfalls als torisch bezeichnet werden, wenn beide Krümmungskurven des Krümmungsprofils kreisbogenförmig ausgebildet sind, jedoch unterschiedliche Krümmungsradien aufweisen.

Das Krümmungsprofil einer Auflagefläche kann als sphärisch bezeichnet werden, wenn beide Krümmungskurven des Krümmungsprofils kreisbogenförmig ausgebildet sind und einen im Wesentlichen gleichen Krümmungsradius aufweisen. Das Krümmungsprofil einer sphärischen Auflagefläche entspricht im Wesentlichen einer Kugelschale.

Durch die unterschiedlichen Krümmungsprofile der Auflageflächen der Adaptervorrichtung können somit die unterschiedlichen Geometrien der Außenscheibe und der Innenscheibe ausgeglichen werden.

Gegebenenfalls kann vorgesehen sein, dass das erste Krümmungsprofil keine Krümmung aufweist, also plan ist. Gegebenenfalls kann ebenfalls vorgesehen sein, dass das erste Krümmungsprofil eine Krümmung in einer Raumrichtung aufweist. Gegebenenfalls kann ebenfalls vorgesehen sein, dass das erste Krümmungsprofil eine Krümmung in zwei zueinander orthogonalen Raumrichtungen aufweist.

Ebenso kann vorgesehen sein, dass das zweite Krümmungsprofil keine Krümmung aufweist, also plan ist. Gegebenenfalls kann ebenfalls vorgesehen sein, dass das zweite Krümmungsprofil eine Krümmung in einer Raumrichtung aufweist. Gegebenenfalls kann ebenfalls vorgesehen sein, dass das zweite Krümmungsprofil eine Krümmung in zwei zueinander orthogonalen Raumrichtungen aufweist.

Insbesondere kann vorgesehen sein, dass wenigstens eine Krümmungskurve, vorzugsweise beide Krümmungskurven, der ersten Auflagefläche oder der zweiten Auflagefläche im Wesentlichen kreisbogenförmig ausgebildet sind, sodass die entsprechende Auflagefläche im Wesentlichen sphärisch ist.

Gegebenenfalls kann vorgesehen sein, dass die erste Auflagefläche ein Krümmungsprofil aufweist, das aus zwei Krümmungskurven gebildet ist, deren Krümmungsradien im Wesentlichen unterschiedlich sind, und dass die zweite Auflagefläche ein Krümmungsprofil aufweist, das aus zwei Krümmungskurven gebildet ist, deren Krümmungsradien im Wesentlichen gleich sind. Insbesondere kann die erste Auflagefläche also eine torische Geometrie und die zweite Auflagefläche eine sphärische Geometrie aufweisen.

Dadurch wird eine besonders bevorzugte Anpassung von optischen Linsen oder optischen Gläsern an torische oder zylindrische Sichtscheiben ermöglicht.

Gegebenenfalls kann vorgesehen sein, dass innerhalb des Randelements eine Sichtfreistellung ausgebildet ist. Vorzugsweise kann es sich um einzige Sichtfreistellung handeln. Das Randelement kann also insbesondere als umlaufender Steg ausgebildet sein. Das Randelement kann insbesondere einstückig ausgebildet sein.

Alternativ kann das Randelement auch mehrstückig ausgeführt sein. Insbesondere können ein erstes Randelement zum Anbringen einer ersten Außen- und Innenscheibe, und ein separates zweites Randelement zum Anbringen einer zweiten Außen- und Innenscheibe vorgesehen sein. Dabei kann es sich insbesondere um die rechte und linke Seite einer Sportbrille handeln.

Es ist bevorzugt, dass das Randelement, bzw. die Sichtfreistellung des Randelements, eine geeignete Größe aufweist, um das Sichtfeld des Nutzers nicht oder nur minimal einzuschränken. Die Größe der Sichtfreistellung kann daher auf die jeweiligen Gegebenheiten angepasst werden.

Das Randelement ist bevorzugt derart ausgebildet, dass es die Belüftungsöffnungen, die in üblichen Brillen oder Visieren vorgesehen sind, nicht verschließt.

Das Krümmungsprofil der Auflageflächen kann insbesondere durch die Höhe, die Biegung und die Ausrichtung der Auflagebereiche des Randelements festgelegt sein.

Um Auflageflächen zu schaffen, die nicht parallel verlaufen kann insbesondere die Höhe des Randelements an unterschiedlichen Stellen variieren.

Die Erfindung betrifft weiterhin eine Sichtscheibe für eine Brille oder für ein Helmvisier, umfassend eine erfindungsgemäße Adaptervorrichtung, sowie zumindest eine an der ersten Auflagefläche angeordnete Außenscheibe und zumindest eine an der zweiten Auflagefläche angeordnete Innenscheibe.

Bei einer erfindungsgemäßen Sichtscheibe sind die Außenscheibe und die Innenscheibe also insbesondere direkt an der Adaptervorrichtung angeordnet. Die Verbindung kann durch Verkleben, Verschweißen, durch eine magnetische Verbindung oder andere Verbindungstechniken erfolgen.

Es ist vorteilhaft, wenn die Verbindung derart ausgebildet ist, dass sich im Inneren der Sichtscheibe, also zwischen Innenscheibe und Außenscheibe kein Kondenswasser bilden kann. Die Verbindung zwischen den Scheiben und der Adaptervorrichtung erfolgt also vorzugsweise in flüssigkeitsdichter Weise oder in dampfdichter Weise.

Gegebenenfalls kann vorgesehen sein, dass in der Innenscheibe zumindest eine optische Linse, also ein Sehbehelf zur Korrektur von Fehlsichtigkeit, integriert ist. Die Positionierung der optischen Linse erfolgt bevorzugt an der Innenscheibe. Bevorzugt sind zwei optische Linsen vorgesehen, beispielsweise um unterschiedliche Dioptrienzahlen des Verwenders / der Verwenderin ausgleichen zu können.

Gegebenenfalls kann vorgesehen sein, dass die Innenscheibe ein Fassungselement aufweist, oder ein Fassungselement ist, in das die optische Linse eingefasst ist. Die optische Linse kann mit dem Fassungselement verbunden sein. Das Fassungselement kann mit der Adaptervorrichtung verbunden sein. Es kann also vorgesehen sein, das die Adaptervorrichtung und die optische Linse keine direkte Verbindung aufweisen.

Bevorzugt weist das Fassungselement dasselbe Krümmungsprofil auf wie die optische Linse an der Seite, die der Adaptervorrichtung zugewandt ist.

Gegebenenfalls kann vorgesehen sein, dass das Krümmungsprofil der Außenscheibe parallel zum Krümmungsprofil der ersten Auflagefläche verläuft. Ebenso kann vorgesehen sein, dass das Krümmungsprofil der Innenscheibe parallel zum Krümmungsprofil der zweiten Auflagefläche verläuft. Dadurch wird eine bündige Anlage der Scheiben an die Adaptervorrichtung ermöglicht, was eine stabile Verbindung erlaubt.

Gegebenenfalls kann vorgesehen sein, dass das Krümmungsprofil der der Adaptervorrichtung zugewandten Seite der optischen Linse parallel zum Krümmungsprofil der zweiten Auflagefläche verläuft.

Insbesondere kann vorgesehen sein, dass das Krümmungsprofil der der Adaptervorrichtung zugewandten Seite der optischen Linse parallel zum Krümmungsprofil der Innenscheibe verläuft. Dadurch werden Abbildungsfehler und Spiegelungen vermieden, was den Tragekomfort verbessert.

Die vorliegende Erfindung betrifft weiterhin eine Brille vorzugsweise eine Sportbrille, Skibrille, Motorradbrille oder Schutzbrille, oder ein Helmvisier, insbesondere ein Visier für Feuerwehrhelme oder polizeiliche oder militärische Schutzhelme, umfassend eine erfindungsgemäße Sichtscheibe.

Eine Brille kann im Sinne der vorliegenden Erfindung eine beliebige Vorrichtung bezeichnen, die zum Schutz der Augen eines Nutzers geeignet ist. Brillen im Sinne der vorliegenden Erfindung umfassen auch Schweißbrillen und beliebige andere Schutzbrillen.

Die vorliegende Erfindung betrifft weiterhin einen Helm mit einem erfindungsgemäßen Helmvisier.

Weitere Merkmale der Erfindung ergeben sich aus den Patentansprüchen, den Figuren sowie der Beschreibung des Ausführungsbeispiels.

Die vorliegende Erfindung wird nachfolgend anhand eines nicht einschränkenden Ausführungsbeispiels im Detail erläutert.

Es zeigen:
Fig. 1 eine Explosionsdarstellung eines ersten Ausführungsbeispiels einer erfindungsgemäßen Sichtscheibe;
Fig. 2 eine Schnittansicht der Adaptervorrichtung aus Fig. 1; und
Fig. 3 eine weitere Schnittansicht der Adaptervorrichtung aus Fig. 1.

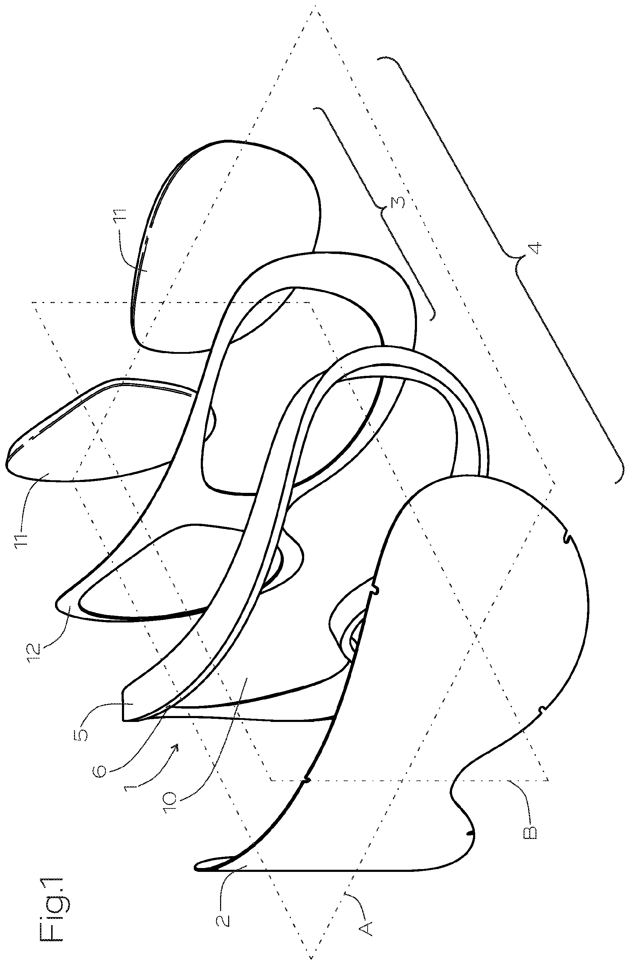

Fig. 1 zeigt eine Explosionsdarstellung eines ersten Ausführungsbeispiels einer erfindungsgemäßen Sichtscheibe 4 zur Verwendung bei einer Motocrossbrille.

Die Sichtscheibe 4 umfasst eine Außenscheibe 2, eine Adaptervorrichtung 1, sowie eine Innenscheibe 3. Die Innenscheibe 3 besteht ihrerseits aus einem Fassungselement 12, in welches zwei optische Linsen 11 eingefasst sind.

Die Adaptervorrichtung 1 umfasst ein stegförmiges umlaufendes Randelement 5, das eine einzige Sichtfreistellung 10 umgibt.

Die Außenscheibe 2 und die Innenscheibe 3 sind in diesem Ausführungsbeispiel mit der Adaptervorrichtung 1 verklebt, um eine stabile Verbindung zu gewährleisten.

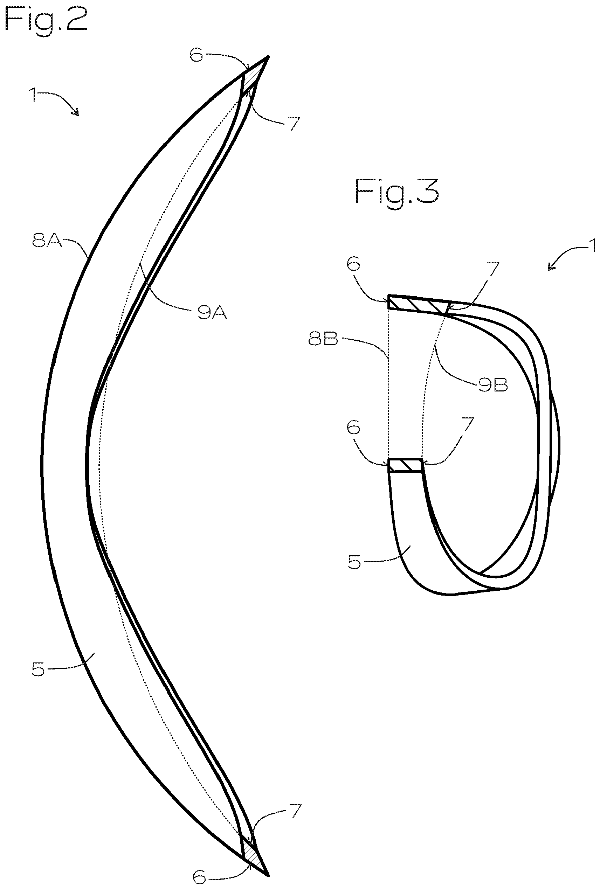

Das Krümmungsprofil der Außenscheibe 2 entspricht dem Krümmungsprofil der ersten Auflagefläche 6, während das Krümmungsprofil der Innenscheibe 3 dem Krümmungsprofil der zweiten Auflagefläche 7 entspricht. Die Geometrien der Krümmungsprofile werden nachfolgend in Bezug auf die Fig. 2 und 3 noch im Detail erläutert.

Die Außenscheibe 2 ist in diesem Ausführungsbeispiel eine torische Scheibe für eine Motocross-Brille. Die Innenscheibe 3 ist eine sphärische Scheibe mit den beiden optischen Linsen 11, die in das Fassungselement 12 integriert sind. Das Krümmungsprofil des Fassungselements 12 entspricht dem Krümmungsprofil der optischen Linsen 11 an der der Adaptervorrichtung 1 zugewandten Seite.

Die Geometrien der Krümmungsprofile werden nachfolgend in Bezug auf die Fig. 2 und 3 noch im Detail erläutert.

Fig. 2 zeigt eine Schnittansicht der Adaptervorrichtung 1 entlang der in Fig. 1 dargestellten ersten Schnittebene A. Fig. 3 zeigt eine weitere Schnittansicht der Adaptervorrichtung 1 entlang der in Fig. 1 dargestellten zweiten Schnittebene B.

Die Schnittebenen A, B sind orthogonal zueinander angeordnet und die in Fig. 2 und 3 gezeigten Schnittansichten stellen daher auch orthogonal zueinander verlaufende Krümmungskurven 8A, 8B, 9A, 9B der Auflageflächen 6, 7 dar. Die Schnittebene A verläuft in horizontaler Richtung; die Schnittebene B in vertikaler Richtung.

In Fig. 2, in der eine Schnittansicht der Adaptervorrichtung 1 mit der ersten Auflagefläche 6 und der zweiten Auflagefläche 7 dargestellt ist, sind die erste Krümmungskurve der ersten Auflagefläche 8A und die erste Krümmungskurve der zweiten Auflagefläche 9A zu sehen. Die erste Krümmungskurve der ersten Auflagefläche 8A fällt in dieser Ansicht mit der ersten Auflagefläche 6 zusammen und ist daher im Gegensatz zu der ersten Krümmungskurve der zweiten Auflagefläche 9A nicht mit einer strichlierten Linie dargestellt.

Es ist erkennbar, dass beide in Fig. 2 dargestellten Krümmungskurven 8A, 9A kreisbogenförmig ausgebildet sind, jedoch einen unterschiedlichen Krümmungsradius aufweisen.

In Fig. 3, in der eine weitere Schnittansicht der Adaptervorrichtung 1 mit der ersten Auflagefläche 6 und der zweiten Auflagefläche 7 dargestellt ist, sind die zweite Krümmungskurve der ersten Auflagefläche 8B und die zweite Krümmungskurve der zweiten Auflagefläche 9B zu sehen.

Die zweite Krümmungskurve der ersten Auflagefläche 8B bildet eine Gerade. Damit sind die Krümmungskurven der ersten Auflagefläche 8A, 8B voneinander unterschiedlich und die erste Auflagefläche weist eine torische Geometrie auf.

Die zweite Krümmungskurve der zweiten Auflagefläche 9B ist kreisbogenförmig ausgebildet. Der Krümmungsradius der zweiten Krümmungskurve der zweiten Auflagefläche 9B entspricht dem Krümmungsradius der ersten Krümmungskurve der zweiten Auflagefläche 9A. Daher weist die zweite Auflagefläche 7 in diesem Ausführungsbeispiel eine sphärische Geometrie auf.

Die Sichtscheibe 4 des ersten Ausführungsbeispiels kann in bekannter Weise in eine Motocrossbrille integriert werden. Andere nicht gezeigte Ausführungsbeispiele betreffen Sichtscheiben 4 zur Verwendung in anderen Brillen oder Schutzvisieren.

### Bezugszeichenliste

- 1: Adaptervorrichtung
- 2: Außenscheibe
- 3: Innenscheibe
- 4: Sichtscheibe
- 5: Randelement
- 6: Erste Auflagefläche
- 7: Zweite Auflagefläche
- 8A, 8B: Krümmungskurve der ersten Auflagefläche
- 9A, 9B: Krümmungskurve der zweiten Auflagefläche
- 10: Sichtfreistellung
- 11: Optische Linse
- 12: Fassungselement
- A: erste Schnittebene
- B: zweite Schnittebene

## Patentansprüche

1. **Sichtscheibe** für eine Brille oder für ein Helmvisier, umfassend eine Adaptervorrichtung (1) sowie zumindest eine an einer ersten Auflagefläche (6) der Adaptervorrichtung (1) angeordnete Außenscheibe (2) und zumindest eine an einer zweiten Auflagefläche (7) der Adaptervorrichtung (1) angeordnete Innenscheibe (3), wobei die Adaptervorrichtung (1) zumindest ein stegförmiges Randelement (5) mit der ersten Auflagefläche (6) und der zweiten Auflagefläche (7) umfasst, und wobei die Auflageflächen (6, 7) zueinander nicht parallel sind, **dadurch gekennzeichnet, dass** in der Innenscheibe (3) zumindest eine optische Linse (11) integriert ist, und **dadurch gekennzeichnet, dass** die Innenscheibe (3) ein Fassungselement (12) ist, in das die optische Linse (11) eingefasst ist.

2. Sichtscheibe nach Anspruch 1, **dadurch gekennzeichnet, dass**
a. die erste Auflagefläche (6) ein durch zwei Krümmungskurven (8A, 8B) gebildetes erstes Krümmungsprofil aufweist, und
b. die zweite Auflagefläche (7) ein durch zwei Krümmungskurven (9A, 9B) gebildetes zweites Krümmungsprofil aufweist,
c. wobei sich das erste Krümmungsprofil vom zweiten Krümmungsprofil unterscheidet.

3. Sichtscheibe nach Anspruch 2, **dadurch gekennzeichnet, dass** das erste Krümmungsprofil keine Krümmung, eine Krümmung in einer einzigen Raumrichtung oder eine Krümmung in zwei zueinander orthogonalen Raumrichtungen aufweist.

4. Sichtscheibe nach Anspruch 2 oder 3, **dadurch gekennzeichnet, dass** das zweite Krümmungsprofil keine Krümmung, eine Krümmung in einer einzigen Raumrichtung oder eine Krümmung in zwei zueinander orthogonalen Raumrichtungen aufweist.

5. Sichtscheibe nach einem der Ansprüche 2 bis 4, **dadurch gekennzeichnet, dass** wenigstens eine Krümmungskurve (8A, 8B, 9A, 9B), vorzugsweise beide Krümmungskurven, der ersten Auflagefläche (6) oder der zweiten Auflagefläche (7) im Wesentlichen kreisbogenförmig ausgebildet sind.

6. Sichtscheibe nach einem der Ansprüche 2 bis 5, **dadurch gekennzeichnet,**
- **dass** das erste Krümmungsprofil aus zwei Krümmungskurven (8A, 8B) gebildet ist, deren Krümmungsradien im Wesentlichen unterschiedlich sind, und
- **dass** das zweite Krümmungsprofil aus zwei Krümmungskurven (9A, 9B) gebildet ist, deren Krümmungsradien im Wesentlichen gleich sind.

7. Sichtscheibe nach einem der Ansprüche 1 bis 6, **dadurch gekennzeichnet, dass** innerhalb des Randelements (5) eine Sichtfreistellung (10) ausgebildet ist.

8. Sichtscheibe nach einem der Ansprüche 1 bis 7, **dadurch gekennzeichnet, dass** das Randelement (5) einstückig ausgebildet ist.

9. Sichtscheibe nach einem der Ansprüche 1 bis 7, **dadurch gekennzeichnet, dass** mehrere, vorzugsweise zwei Randelemente (5) vorgesehen sind.

10. Sichtscheibe nach einem der Ansprüche 1 bis 9, **dadurch gekennzeichnet, dass** die Außenscheibe (2) und/oder die Innenscheibe (3) mit der Adaptervorrichtung (1) verklebt, verschweißt oder magnetisch verbunden ist.

11. Sichtscheibe nach einem der Ansprüche 1 bis 10, **dadurch gekennzeichnet, dass** das Krümmungsprofil der Außenscheibe (2) parallel zum Krümmungsprofil der ersten Auflagefläche (6) verläuft, und dass das Krümmungsprofil der Innenscheibe (3) parallel zum Krümmungsprofil der zweiten Auflagefläche (7) verläuft.

12. Sichtscheibe nach einem der Ansprüche 1 bis 11, **dadurch gekennzeichnet, dass** das Krümmungsprofil der der Adaptervorrichtung (1) zugewandten Seite der optischen Linse (11) parallel zum Krümmungsprofil der zweiten Auflagefläche (7), insbesondere parallel zum Krümmungsprofil der Innenscheibe (3), verläuft.

13. **Brille** vorzugsweise Sportbrille, Skibrille, Motorradbrille oder Schutzbrille, oder Helmvisier, insbesondere Visier für Feuerwehrhelme oder polizeiliche oder militärische Schutzhelme, umfassend eine Sichtscheibe nach einem der Ansprüche 1 bis 12.

14. **Helm** mit einem Helmvisier gemäß Anspruch 13.

## Claims

1. A **view panel** for a pair of goggles or a helmet visor, comprising an adapter means (1), at least one outer panel (2) arranged on a first support surface (6) of the adapter means (1) and at least one inner panel (3) arranged on a second support surface (7) of the adapter means (1), wherein the adapter means (1) comprises at least one web-shaped edge element (5) with the first support surface (6) and the second support surface (7) and wherein the support surfaces (6, 7) are not parallel to one another, **characterised in that** at least one optical lens (11) is integrated in the inner panel (3) and **characterised in that** the inner panel (3) is a frame element (12) in which the optical lens (11) is enclosed.

2. The view panel according to claim 1, **characterised in that**
a. the first support surface (6) has a first curvature profile, which is formed by two curvature curves (8A, 8B), and
b. the second support surface (7) has a second curvature profile, which is formed by two curvature curves (9A, 9B),
c. wherein the first curvature profile differs from the second curvature profile.

3. The view panel according to claim 2, **characterised in that** the first curvature profile has no curvature, a curvature in only one spatial direction, or a curvature in two mutually orthogonal spatial directions.

4. The view panel according to claim 2 or 3, **characterised in that** the second curvature profile has no curvature, a curvature in only one spatial direction, or a curvature in two mutually orthogonal spatial directions.

5. The view panel according to one of claims 2 to 4, **characterised in that** at least one curvature curve (8A, 8B, 9A, 9B), preferably both curvature curves, of the first support surface (6) or the second support surface (7) have a substantially arcuate shape.

6. The view panel according to one of claims 2 to 5, **characterised**
- **in that** the first curvature profile is formed by two curvature curves (8A, 8B) whose radii of curvature are substantially different, and
- **in that** the second curvature profile is formed by two curvature curves (9A, 9B) whose radii of curvature are substantially the same.

7. The view panel according to one of claims 1 to 6, **characterised in that** a viewing clearance (10) is provided in the edge element (5).

8. The view panel according to one of claims 1 to 7, **characterised in that** the edge element (5) is designed as a single piece.

9. The view panel according to one of claims 1 to 7, **characterised in that** multiple, preferably two, edge elements (5) are provided.

10. The view panel according to one of claims 1 to 9, **characterised in that** the outer panel (2) and/or the inner panel (3) is/are glued, welded or magnetically connected to the adapter means (1).

11. The view panel according to one of claims 1 to 10, **characterised in that** the curvature profile of the outer panel (2) is parallel to the curvature profile of the first support surface (6) and **in that** the curvature profile of the inner panel (3) is parallel to the curvature profile of the second support surface (7).

12. The view panel according to one of claims 1 to 11, **characterised in that** the curvature profile of the side of the optical lens (11) facing the adapter means (1) is parallel to the curvature profile of the second support surface (7), in particular parallel to the curvature profile of the inner panel (3).

13. A **pair of goggles,** preferably a pair of sports goggles, ski goggles, motorcycle goggles or safety goggles, or a helmet visor, in particular a visor for fire brigade helmets or police or military protective helmets, comprising a view panel according to one of claims 1 to 12.

14. A **helmet** having a helmet visor according to claim 13.

## Revendications

1. **Vitre de vision** pour lunettes ou pour visière de casque, comprenant un dispositif adaptateur (1) ainsi qu'au moins une vitre extérieure (2) disposée sur une première surface d'appui (6) du dispositif adaptateur (1) et au moins une vitre intérieure (3) disposée sur une deuxième surface d'appui (7) du dispositif adaptateur (1), le dispositif adaptateur (1) comprenant au moins un élément de bordure (5) en forme de barrette avec la première surface d'appui (6) et la deuxième surface d'appui (7), et les surfaces d'appui (6, 7) n'étant pas parallèles entre elles, **caractérisée en ce qu'**au moins une lentille optique (11) est intégrée dans la vitre intérieure (3) et **caractérisée**
**en ce que** la vitre intérieure (3) est un élément de monture (12) dans lequel la lentille optique (11) est enchâssée.

2. Vitre de vision selon la revendication 1, **caractérisée en ce que**
a. la première surface d'appui (6) présente un premier profil de courbure formé par deux courbes de courbure (8A, 8B), et
b. la deuxième surface d'appui (7) présente un deuxième profil de courbure formé par deux courbes de courbure (9A, 9B),
c. le premier profil de courbure étant différent du deuxième profil de courbure.

3. Vitre de vision selon la revendication 2, **caractérisée en ce que** le premier profil de courbure ne présente aucune courbure, une courbure dans une seule direction spatiale ou une courbure dans deux directions spatiales orthogonales entre elles.

4. Vitre de vision selon la revendication 2 ou 3, **caractérisée en ce que** le deuxième profil de courbure ne présente aucune courbure, une courbure dans une seule direction spatiale ou une courbure dans deux directions spatiales orthogonales entre elles.

5. Vitre de vision selon l'une des revendications 2 à 4, **caractérisée en ce qu'**au moins une courbe de courbure (8A, 8B, 9A, 9B), de préférence les deux courbes de courbure, de la première surface d'appui (6) ou de la deuxième surface d'appui (7) sont sensiblement en forme d'arc de cercle.

6. Vitre de vision selon l'une des revendications 2 à 5, **caractérisée**
- **en ce que** le premier profil de courbure est formé de deux courbes de courbure (8A, 8B) dont les rayons de courbure sont sensiblement différents et
- **en ce que** le deuxième profil de courbure est formé de deux courbes de courbure (9A, 9B) dont les rayons de courbure sont sensiblement égaux.

7. Vitre de vision selon l'une des revendications 1 à 6, **caractérisée en ce qu'**une position de dégagement visuel (10) est formée à l'intérieur de l'élément de bordure (5).

8. Vitre de vision selon l'une des revendications 1 à 7, **caractérisée en ce que** l'élément de bordure (5) est réalisé d'une seule pièce.

9. Vitre de vision selon l'une des revendications 1 à 7, **caractérisée en ce que** plusieurs, de préférence deux, éléments de bordure (5) sont prévus.

10. Vitre de vision selon l'une des revendications 1 à 9, **caractérisée en ce que** la vitre extérieure (2) et/ou la vitre intérieure (3) est collée, soudée ou reliée magnétiquement au dispositif adaptateur (1).

11. Vitre de vision selon l'une des revendications 1 à 10, **caractérisée en ce que** le profil de courbure de la vitre extérieure (2) est parallèle au profil de courbure de la première surface d'appui (6) et **en ce que** le profil de courbure de la vitre intérieure (3) est parallèle au profil de courbure de la deuxième surface d'appui (7).

12. Vitre de vision selon l'une des revendications 1 à 11, **caractérisée en ce que** le profil de courbure de la face de la lentille optique (11) tournée vers le dispositif adaptateur (1) est parallèle au profil de courbure de la deuxième surface d'appui (7), en particulier parallèle au profil de courbure de la vitre intérieure (3).

13. **Lunettes,** de préférence lunettes de sport, lunettes de ski, lunettes de moto ou lunettes de protection, ou visière de casque, en particulier visière pour casques de pompiers ou casques de protection de la police ou de l'armée, comprenant une vitre de vision selon l'une des revendications 1 à 12.

14. **Casque** avec une visière de casque selon la revendication 13.
